# EUROPÄISCHE PATENTSCHRIFT

(11) **EP 0 931 257 B1**
(45) Veröffentlichungstag und Bekanntmachung des Hinweises auf die Patenterteilung: **20.02.2008**
(21) Anmeldenummer: 98948736.8
(22) Anmeldetag: 06.08.1998
(51) Int. Cl.: G01N 27/407

(54) **VERFAHREN ZUR BESTIMMUNG OXIDIERBARER BESTANDTEILE IN EINEM GASGEMISCH**
METHOD FOR DETERMINING OXIDIZABLE CONSTITUENTS IN A GASEOUS MIXTURE
PROCEDE POUR LA DETERMINATION DES CONSTITUANTS OXYDABLES DANS UN MELANGE GAZEUX

(30) Priorität: 12.08.1997 DE 19734860
(43) Veröffentlichungstag der Anmeldung: 28.07.1999
(73) Patentinhaber: ROBERT BOSCH GMBH, 70442 Stuttgart (DE)
(72) Erfinder: WAHL, Thomas, D-75172 Pforzheim (DE); BRINZ, Thomas, D-71069 Sindelfingen (DE); SCHUMANN, Bernd, D-71277 Rutesheim (DE)
(86) Internationale Anmeldenummer: PCT/DE1998/002261
(87) Internationale Veröffentlichungsnummer: WO 1999/008100

(56) Entgegenhaltungen:
- EP-A- 0 759 552
- US-A- 4 226 692
- US-A- 4 505 783
- US-A- 4 718 991

## Beschreibung

### Stand der Technik

Die Erfindung geht aus von einem Verfahren zur Bestimmung oxidierbarer Bestandteile in einem Gasgemisch nach der Gattung des unabhängigen Hauptanspruchs.

Verfahren zum Bestimmen von oxidierbaren Bestandteilen in Gasgemischen sind bekannt. Dabei wird im allgemeinen eine Spannung zwischen einer Arbeitselektrode und einer Referenzelektrode gemessen, deren Größe einen Rückschluß auf die Konzentration des zu bestimmenden Gasbestandteiles erlaubt. Weiterhin ist es beispielsweise auf dem Gebiet der Sauerstoffsensoren, auch Lamdasonden genannt, bekannt, den sogenannten Grenzstrom zu messen, der durch den Transport von Sauerstoffanionen durch einen Festelektrolytkörper zwischen einer Referenz- und einer Arbeitselektrode hervorgerufen wird und der über die Nernst'sche Gleichung die Gleichgewichtspartialdruckkonzentration von Sauerstoff zu bestimmen erlaubt. Dabei passieren die zu messenden Gase (O₂, NO) eine Diffusionsbarriere und werden an der Arbeitselektrode elektrochemisch abgepumpt. Es gibt jedoch noch keine befriedigenden Verfahren zur Bestimmung von einzelnen brennbaren Gasbestandteilen in Gasgemischen mit einer hinreichenden Genauigkeit, insbesondere im Falle von Ammoniak gibt es derzeit keine zuverlässigen Systeme. Auch konnte die Querempfindlichkeit auf verschiedene Gasbestandteile nicht befriedigend minimiert werden. Ein weiteres Problem stellte bislang die Temperatursteuerung derartiger Sensoren dar, die bislang aufwendig über verschiedene Messanordnungen erfolgen musste.

So ist aus der EP 0759552 A ein Verfahren zur Bestimmung oxidierbarer Gase mittels einer Festelektrolytzelle mit einer Referenzelektrode und einer aus leitfähigen Mischoxiden bestehenden gassensitiven Arbeitselektrode bekannt. Weiterhin ist aus der US 4,718,991 eine Festelektrolytmesszelle bekannt, die einen protonenleitenden Festelektrolytkörper umfasst. Dessen Messelektroden können unter anderem aus Zinn- oder Indiumoxid gefertigt sein.

### Vorteile der Erfindung

Gegenüber dem bekannten Stand der Technik weist das erfindungsgemäße Verfahren zur Bestimmung oxidierbarer Bestandteile in einem Gasgemisch mittels einer Festelektrolytzelle, die mindestens eine Referenzelektrode und mindestens eine auf die oxidierbaren Bestandteile sensitiv wirkende Arbeitselektrode aufweist, den Vorteil auf, dass direkt der Kurzschlussstrom gemessen wird, der durch die elektrochemische Oxidation eines zu bestimmenden Gasbestandteiles hervorgerufen wird. Da jeder Gasbestandteil ein verschiedenes elektrochemisches Potential aufweist, wird auch ein verschiedener Kurzschlussstrom gemessen bzw. ist der Kurzschlussstrom konzentrationsabhängig, so dass jeder oxidierbare Gasbestandteil zweifelsfrei identifiziert und die Konzentration gemessen werden kann.

Durch die in den Unteransprüchen aufgeführten Maßnahmen sind vorteilhafte Weiterbildungen und Verbesserungen des im Hauptanspruch angegebenen Verfahrens möglich.

in bevorzugter Ausführung besteht die Arbeitselektrode aus gemischten Metalloxiden, die elektrisch leitfähig sind und aus der Gruppe der Spinelle, Pseudobrookite, Äschynite, Fergusonite ausgewählt sind. Diese Verbindungsklassen erlauben eine hinreichende Variation hinsichtlich der Empfindlichkeit der jeweiligen Verbindung für spezifische Gasbestandteile, wie beispielsweise NO, NH₃, ungesättigte Kohlenwasserstoffe oder auch Schwefelverbindungen. Es wird durch diese Vielzahl der jeweiligen Verbindung für spezifische Gasbestandteile, wie beispielsweise NO, NH₃, ungesättigte Kohlenwasserstoffe oder auch Schwefelverbindungen. Es wird durch diese Vielzahl von Verbindungen eine befriedigende Variation und Empfindlichkeit der Verbindungen für spezifische Stoffe gewährleistet.

In einer weiteren bevorzugten Ausführung wird die temperaturabhängige elektrische Leitfähigkeit des Festelektrolytkörpers zur Temperatursteuerung der Festelektrolytzelle eingesetzt. Es ist bekannt, daß mit Yttrium stabilisiertes Zirkoniumdioxid in seiner kubischen Modifikation elektrisch leitfähig ist, wobei die Leitfähigkeit von der Temperatur abhängt. Durch einfaches Messen der elektrischen Leitfähigkeit des Festelektrolytkörpers kann die gesamte Festelektrolytzelle zur Temperatursteuerung des Verbrennungsvorganges eingesetzt werden, ohne daß komplizierte und aufwendige Apparaturen notwendig sind.

In vorteilhafter Weise wird der Referenzelektrode über den Festelektrolytkörper eine Wechselspannung aufgeprägt, die besonders vorteilhaft im Bereich von 0,1 bis 10⁶ Hz, insbesondere im Bereich von 1 kHz bis 200 kHz liegt.

In einer bevorzugten Ausführung wird an einem Meßwiderstand der Spannungsabfall der Festelektrolytzelle gemessen, und aus dem Spannungsabfall der Widerstand des Festelektrolytkörpers in Abhängigkeit der Temperatur bestimmt, so daß jederzeit durch das Messen des Spannungsabfalles in einfachster weise die Temperatursteuerung der Festelektrolytzelle gegeben ist.

### Zeichnung

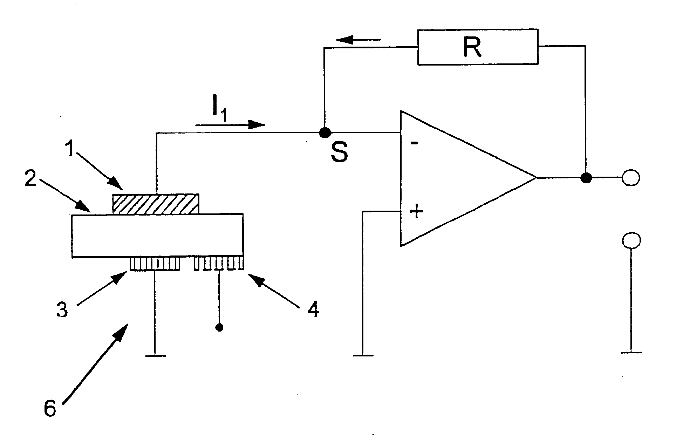

Die einzige Figur zeigt eine Schaltungsanordnung zur Realisierung des erfindungsgemäßen Verfahrens.

### Ausführungsbeispiel

Der Sensor besteht aus einem Festelektrolyten 2, beispielsweise aus mit Yttrium stabilisiertem Zirkoniumdioxid (YSZ) oder einem anderen sauerstoffionen- und elektrisch leitendem Material, einer Referenzelektrode 3, beispielsweise aus Platin oder einem anderen katalytisch aktiven Edelmetall. Es ist auch möglich, zusätzlich eine zweite Referenzelektrode 4 unter dem Festelektrolytkörper anzuordnen. Die Referenzelektrode 3 ist direkt dem Gasgemisch, beispielsweise dem Abgas von Verbrennungsmotoren ausgesetzt, oder über den porösen Festelektrolyten oder über eine seitliche oder dem Festelektrolyten eingelagerte Diffusionsschicht dem Gasgemisch ausgesetzt. Falls zwei Referenzelektroden 3, 4 angeordnet sind, kann eine der beiden Referenzelektroden auch der Luft ausgesetzt sein. Auf dem Festelektrolytkörper 2 ist eine Metalloxidsensorschicht 1, beispielsweise aus einem elektrisch leitfähigen Spinell oder einem Äschynit angeordnet. Der Spinell kann beispielsweise aus der Gruppe der 2, 3-Spinelle der 4, 2-Spinelle oder der 6, 1 Spinelle ausgewählt sein. Ebenso ist es möglich, Pseudobrookite einzusetzen. Beispiele für mögliche Spinelle sind beispielsweise NiFeMnO₄, CoCr₂O₄, CoCrMnO₄, TiCr₂0₅, TiCo₂0₄, ohne daß diese Auswahl eine Beschränkung der Erfindung darstellt. Da jeder Spinell auf ein anderes oxidierbares Gas besonders sensitiv ist, können so in optimaler Weise auch bislang als schwierig zu detektierende Gase, beispielsweise NH₃ zuverlässig bestimmt werden. Zwischen der Netalloxidschicht 1 und einer der Referenzelektroden 3 wird für die Detektion von oxidierbaren Bestandteilen der Kurzschlußstrom gemessen. Dies geschieht mit der Schaltung, dargestellt in der einzigen Figur.

Durch den Operationsverstärker wird über den Widerstand R am Punkt S ein Strom eingeregelt, so daß der vom Sensor stammende Strom I₁ und der über den Widerstand R fließende Strom I_{R} entgegengesetzt und gleich sind. Der Punkt S wird in dieser Anordnung auch als virtuelle Masse bezeichnet.

Für die Temperatursteuerung des Sensors kann eine zusätzliche zweite Referenzelektrode 4 dahingehend verwendet werden, daß die Temperaturabhängigkeit der Leitfähigkeit des Festelektrolyten ausgenutzt wird. Die Leitfähigkeit des Festelektrolyten wird gemessen, indem der Referenzelektrode 3 und 4 über den Festelektrolyten 2 eine kleine Wechselspannung aufgeprägt wird, deren Frequenz zwischen 0,1 und 10⁶ Hz, insbesondere von 1 kHz bis 200 kHz mit N = 50 mV Amplitude liegt. Der Wechselstrom I wird an einem Meßwiderstand durch Messung des Spannungsabfalls bestimmt. Aus dem Quotienten U/I wird der Widerstand des Festelektrolyten bestimmt. Der Widerstand des Festelektroyten ist eine Funktion der Sensortemperatur.

An der Metalloxidelektrode werden die Kohlenwasserstoffe ähnlich wie einer Brennstoffzelle elektrochemisch oxidiert. Anhang einiger Beispiele für den Nachweis von Gasen über deren Elektrodenreaktionen wird die Erfindung weiter erläutert, ohne daß die Auswahl der Gase eine Beschränkung darstellt.

### Sauerstoff:

O₂ + 4e⁻ ⇒ 2O²⁻

### Stickoxide (NOₓ):

1. Oxidation von NO zu NO₂: NO + O²⁻ ⇒ NO₂ + 2e⁻
2. Reduktion von NO₂ zu NO: NO₂ + 2e⁻ ⇒ NO + O²⁻
3. Reduktion von NO: NO + 2e⁻ ⇒ 1/2 N₂ + O²⁻

### COₓ:

1. Oxidation von CO zu CO₂: CO + O²⁻ ⇒ CO₂ + 2e⁻
2. Reduktion von CO₂ zu CO: CO₂ + 2e⁻ ⇒ CO + O²⁻

### SOₓ:

1. Oxidation von SO₂: SO₂ + O²⁻ ⇒ SO₃ + 2e⁻
2. Reduktion von SO₃: SO₃ + 2e⁻ ⇒ SO₂ + O²⁻
3. Reduktion von SO₂: SO₂ + 4e⁻ ⇒ S + 2 O²⁻

### Cₓ H_{y}:

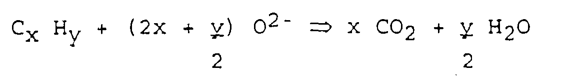

### NH₃:

2 NH₃ + 3O²⁻ ⇒ N₂ + 3H₂O

## Patentansprüche

1. Verfahren zur Bestimmung oxidierbarer Bestandteile in einem Gasgemisch mittels einer Festelektrolytzelle mit mindestens einer Referenzelektrode (3, 4) und mit mindestens einer, auf die oxidierbaren Bestandteile sensitiv wirkenden Arbeitselektrode, aus elektrisch leitfähigen Mischoxiden, wobei der durch die elektrochemische Oxidation eines zu bestimmenden Gasbestandteiles hervorgerufene Strom zwischen der Referenzelektrode (3, 4) und der Arbeitselektrode gemessen wird, **dadurch gekennzeichnet, dass** der gemessene Strom ein Kurzschlussstrom ist.

2. Verfahren nach Anspruch 1, **dadurch gekennzeichnet, dass** die Mischoxide gemischte Metalloxide sind, ausgewählt aus der Gruppe, bestehend aus Spinelle, Pseudobrookiten, Äschyniten, Fergusoniten.

3. Verfahren nach Anspruch 1, **dadurch gekennzeichnet, dass** die temperaturabhängige elektrische Leitfähigkeit des Festelektrolytkörpers (2) zur Temperatursteuerung der Festelektrolytzelle eingesetzt wird.

4. Verfahren nach Anspruch 1, **dadurch gekennzeichnet, dass** eine Referenzelektrode (3, 4) einer zusätzlichen Elektrode (1) über den Festelektrolytkörper eine Wechselspannung aufgeprägt wird.

5. Verfahren nach Anspruch 5, **dadurch gekennzeichnet, dass** die Wechselspannung im Bereich von 0,1 bis 10⁶ Hz, insbesondere im Bereich von 1 kHz bis 200 kHz liegt.

6. Verfahren nach Anspruch 7, **dadurch gekennzeichnet, dass** die Amplitude der Wechselspannung (5m-) 50 mV beträgt.

7. Verfahren nach einem der Ansprüche 3 bis 6, **dadurch gekennzeichnet, dass** an einem Messwiderstand der Spannungsabfall der Festelektrolytzelle abgegriffen wird.

8. Verfahren nach Anspruch 7, **dadurch gekennzeichnet, dass** aus dem Spannungsabfall der temperaturabhängige Widerstand des Festelektrolytkörpers (2) bestimmt wird.

## Claims

1. Method for determining oxidizable constituents in a gaseous mixture by means of a solid electrolyte cell with at least one reference electrode (3, 4) and with at least one working electrode comprising electrically conductive mixed oxides and acting sensitively with respect to the oxidizable constituents, the current between the reference electrode (3, 4) and the working electrode that is induced by the electrochemical oxidation of a gas constituent that is to be determined being measured, **characterized in that** the measured current is a short-circuit current.

2. Method according to Claim 1, **characterized in that** the mixed oxides are mixed metal oxides, chosen from the group comprising spinels, pseudobrookites, eschynites and fergusonites.

3. Method according to Claim 1, **characterized in that** the temperature-dependent electrical conductivity of the solid electrolyte body (2) is used for controlling the temperature of the solid electrolyte cell.

4. Method according to Claim 1, **characterized in that** an alternating voltage is impressed on a reference electrode (3, 4) of an additional electrode (1) via the solid electrolyte body.

5. Method according to Claim 4, **characterized in that** the alternating voltage lies in the range from 0.1 to 10⁶ Hz, in particular in the range from 1 kHz to 200 kHz.

6. Method according to Claim 7, **characterized in that** the amplitude of the alternating voltage is 50 mV.

7. Method according to one of Claims 3 to 6, **characterized in that** the voltage drop across the solid electrolyte cell is picked up at a measuring resistor.

8. Method according to Claim 7, **characterized in that** the temperature-dependent resistance of the solid electrolyte body (2) is determined from the voltage drop.

## Revendications

1. Procédé de détermination de constituants oxydables dans un mélange gazeux au moyen d'une cellule électrolytique solide comportant au moins une électrode de référence (3, 4) et au moins une électrode de travail sensible aux constituants oxydables, à partir d'oxydes mixtes électriquement conducteurs, dans lequel l'oxydation électrochimique d'un constituant gazeux à déterminer permet de mesurer le courant provoqué entre l'électrode de référence (3, 4) et l'électrode de travail,
**caractérisé en ce que**
le flux mesuré est un courant de court-circuit.

2. Procédé selon la revendication 1,
**caractérisé en ce que**
les oxydes mixtes sont des oxydes métalliques mixtes choisis dans le groupe constitué de spinelles, de pseudo brookites, d'aeschynites, de fergusonites.

3. Procédé selon la revendication 1,
**caractérisé en ce que**
la conductivité électrique, dépendant de la température du corps électrolytique solide (2) est utilisée pour piloter la température de la cellule d'électrolyte solide.

4. Procédé selon la revendication 1,
**caractérisé en ce qu'**
on imprime à une électrode de référence (3, 4) d'une électrode supplémentaire (1) une tension alternative par l'intermédiaire du corps électrolytique solide.

5. Procédé selon la revendication 5,
**caractérisé en ce que**
la tension alternative est de l'ordre de 0,1 à 10⁶ Hz, en particulier de l'ordre de 1 kHz à 200 kHz.

6. Procédé selon la revendication 7,
**caractérisé en ce que**
l'amplitude de la tension alternative est de (5 m-) 50 mV.

7. Procédé selon l'une des revendications 3 à 6,
**caractérisé en ce que**
la chute de tension de la cellule d'électrolyte solide est mesurée sur une résistance de mesure.

8. Procédé selon la revendication 7,
**caractérisé en ce qu'**
on détermine la résistance, dépendant de la température, du corps électrolytique solide (2) à partir de la chute de tension.
